# EUROPÄISCHE PATENTANMELDUNG

(11) **EP 1 517 285 A2**
(43) Veröffentlichungstag der Anmeldung: **23.03.2005**
(21) Anmeldenummer: 04021882.8
(22) Anmeldetag: 15.09.2004
(51) Int. Cl.: G09F 3/02, G09F 3/03, G09F 3/04

(54) **Anordnung mit einem Etikett**

(30) Priorität: 22.09.2003 DE 20315094 U
(71) Anmelder: HERMA GmbH, 70327 Stuttgart (DE)
(72) Erfinder: Schweikhardt, René, Dipl.-Ing., 73630 Remshalden (DE); Tiedmann, Heiko, Dipl.-Ing., 70619 Stuttgart (DE)
(74) Vertreter: Raible, Hans, Dipl.-Ing.

(57) **Zusammenfassung**

Auf einem Substrat (2) ist ein Selbstklebeetikett (1) angeordnet. Es hat einen ablösbaren nutzbaren Abschnitt (1a) und einen Rahmen (5), welcher diesen nutzbaren Abschnitt umgibt. Rahmen (5) und nutzbarer Abschnitt (1a) sind mit einem Haftkleber (4) versehen und mindestens bereichsweise trennbar miteinander verbunden. An den Stellen (32), wo es den nutzbaren Abschnitt (1a) trägt, ist das Substrat (2) mindestens bereichsweise mit einer dehäsiven Beschichtung (32) versehen ist, um ein Ablösen des Haftklebers (4) des nutzbaren Abschnitts (1a) vom Substrat (2) zu ermöglichen.

## Beschreibung

Die Erfindung betrifft eine Anordnung mit einem Substrat und mindestens einem auf diesem angeordneten Selbstklebeetikett. Sie betrifft ferner eine Karte aus einem solchen Etikett.

Die Kunden/Empfänger wünschen bei modernen Printprodukten vermehrt, dass auf einem bedruckbaren Träger, z.B. einem Papierblatt, mindestens ein Etikett ablösbar angeordnet ist, das zu einer Karte oder dergleichen zusammengeklappt oder -gefaltet werden kann. Die obere und untere Seite einer so gebildeten Karte werden dabei durch den Kleber zusammen gehalten, mit dem das Etikett auch auf der Oberseite des Printprodukts aufgeklebt gewesen war. Die als Träger für ein solches Etikett dienenden Papierbögen oder dergleichen sollen dabei zusammen mit mindestens einem darauf haftenden Etikett in einem Drucker oder einer Druckmaschine individuell bedruckbar sein.

Es sind Etiketten auf Papierbögen bekannt, die fertig auf einem Etiketten-Hilfsträger haftend auf einen Papierbogen aufgeklebt sind. Dies hat den Nachteil, dass die Gesamtdicke des Papierbogens mit dem Etikett und dem Etiketten-Hilfsträger zu groß wird, so dass bei einer nachfolgenden Bedruckung Probleme beim Durchlauf durch einen Drucker oder eine Druckmaschine auftreten können, z.B. bei der Umlenkung um Walzen im Drucker.

Weiterhin sind Etiketten bekannt, die direkt auf einem Papierbogen aufgeklebt sind, wobei ein Klebstoff verwendet wird, der direkt vom Papierbogen abgelöst werden kann. Dieser leicht ablösbare Klebstoff kann jedoch beim Durchlauf durch die Druckmaschine zu einer ungewollten Ablösung des Etiketts führen.

Nachteilig ist ferner, dass wenn die Etiketten zu einer Karte zusammengeklappt worden sind, der Kleber nicht zuverlässig und stark genug die Hälften zusammenhält, so dass es zu einer ungewollten Ablösung kommen kann, bzw. die Trennung der Hälften zu leicht gelingt.

Es ist deshalb eine Aufgabe der Erfindung, eine neue Anordnung mit einem Etikett zur Verfügung zu stellen, das ablösbar auf einem Substrat gehalten ist.

Diese Aufgabe wird gelöst durch eine Anordnung gemäß Anspruch 1. Eine solche Anordnung kann problemlos in einem Drucker bedruckt werden, weil der Rahmen das Selbstklebeetikett gut gegen ein ungewolltes Ablösen schützt.

Eine besonders vorteilhafte Weiterbildung der Erfindung ist Gegenstand des Anspruchs 2. Dadurch, dass der Rahmen - im Gegensatz zum Etikett - auf das Substrat permanent aufgeklebt ist, kann er sich beim Durchlaufen durch einen Drucker nicht vom Substrat lösen und schützt dadurch auch das Etikett vor ungewollter Ablösung.

Die Haftkleberschicht ist bevorzugt aus einem flächig aufgebrachten permanenten Haftkleber gebildet, insbesondere einem UV-vernetzbaren Acrylatkleber, einem Schmelzhaftkleber, oder einem Dispersions-Haftkleber.

Eine Ausgestaltung der Erfindung gemäß Anspruch 24 betrifft eine bevorzugte Verwendung eines Etiketts nach der Erfindung, wobei Flächen von zwei Teilen des Etiketts durch eine Klebeverbindung direkt oder indirekt miteinander verklebt sind und eine Karte bilden, z.B. eine Eintrittskarte oder dgl.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den übrigen Unteransprüchen.

Nachfolgend wird die Erfindung anhand der Zeichnung weiter erläutert. Im Einzelnen zeigt die schematische Darstellung in:
- Fig. 1: eine Draufsicht auf ein erfindungsgemäßes Etikett mit einem dieses umgebenden Rahmen vor dem Aufspenden auf einen Träger, der im folgenden auch als Substrat bezeichnet wird,
- Fig. 2: eine schematische Ansicht eines Transponders, bevor dieser an einem Etikett befestigt wird,
- Fig. 3: eine schematische Darstellung des Befestigungsvorgangs des Transponders am Etikett,
- Fig. 4: eine Draufsicht auf ein Etikett mit daran befestigtem Transponder,
- Fig. 5: eine Schräg-Aufsicht auf einen Träger 2 mit einer Haftvermittler-Schicht 33,
- Fig. 6: eine Schräg-Aufsicht auf einen Träger 2 mit einer Haftvermittler-Schicht 33 und einer darauf ausgebildeten dehäsiven Untergrundfläche 32,
- Fig. 7: eine Schräg-Aufsicht auf einen Träger 2 sowie ein über Untergrundfläche 32 und Haftvermittler-Schicht 33 aufgeklebtes Etikett mit darum herum angeordnetem Rahmen,
- Fig. 8: eine schematische Darstellung des Ablösevorgangs eines Etiketts vom Träger 2 bzw. der Untergrundfläche 32,
- Fig. 9: eine Draufsicht auf ein Etikett mit elektronischem Bauteil,
- Fig. 10: einen Herstellungsvorgang, bei dem aus einem Etikett eine erfindungsgemäße Karte hergestellt wird, z.B. eine Eintrittskarte, ein Fahrausweis, oder ein sonstiger Ausweis, und
- Fig. 11: eine erfindungsgemäße Karte.

Die in den Figuren gleichen Bezugsziffern bezeichnen gleiche oder gleich wirkende Elemente.

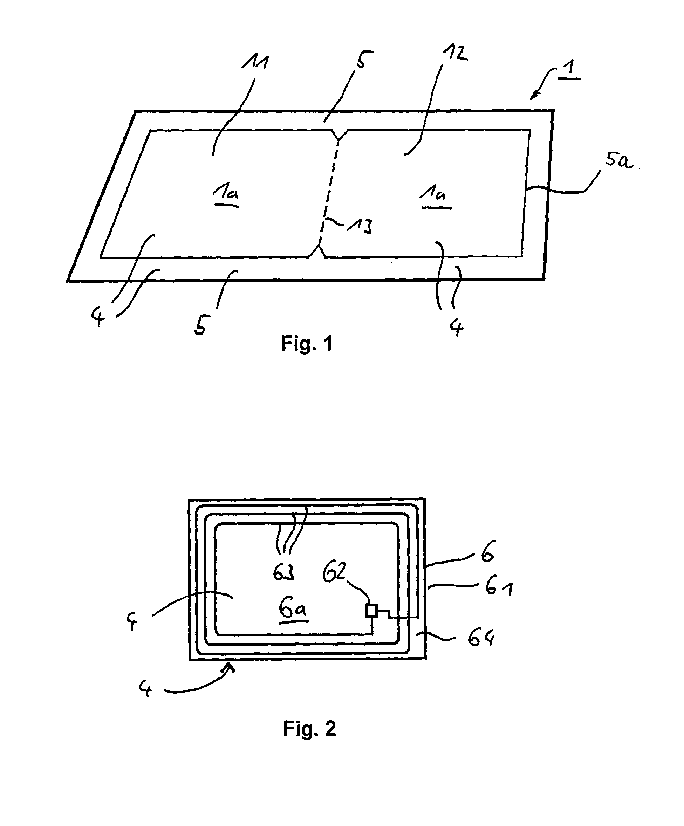

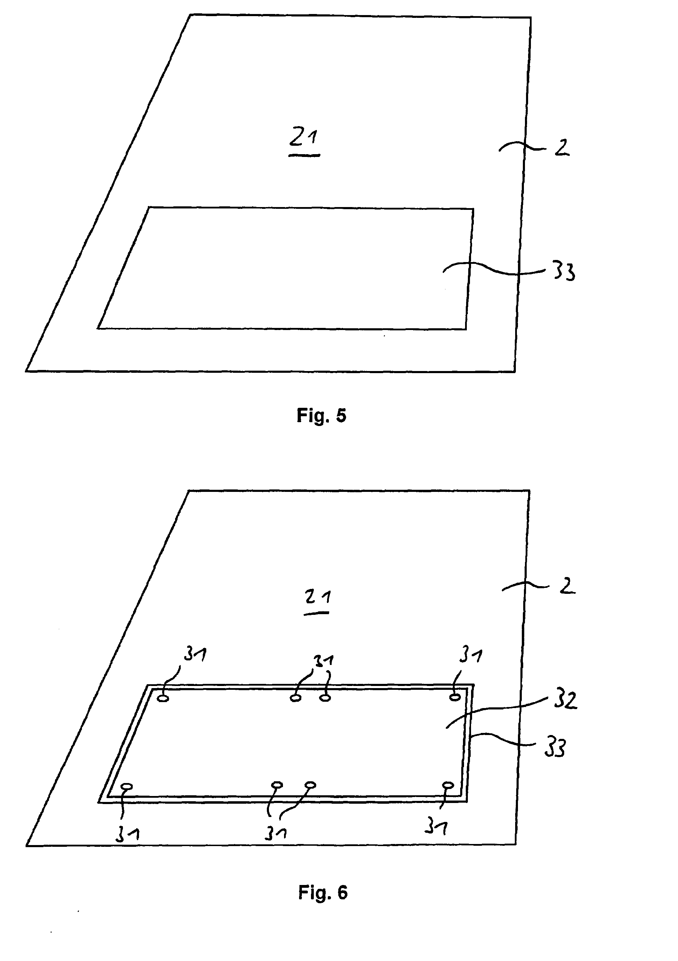

**Fig. 1** zeigt ein Etikett 1, das von einem Rahmen 5 umgeben ist und zwei Teile 11 und 12 aufweist, die gelenkig miteinander verbunden sind. Die gelenkige Verbindung 13 ist dabei durch eine unterbrochene Stanzung (Perforation) entlang einer Falzkante gebildet. Der Rahmen 5 wird durch eine abreißbare Stanzung 5a entlang der Außenkante des Etiketts 1 zusammen mit diesem hergestellt. Dargestellt ist die Draufsicht auf die Unterseite 1 a des Etiketts 1, die später auf eine dehäsive Untergrundfläche 3 geklebt wird. Dazu ist diese - beim fertigen Printprodukt - einem Träger bzw. Substrat 2 (Fig. 5 bis 8) zugewandte Fläche 1 a des Etiketts 1 und des Rahmens 5 mit einem Haftkleber 4 beschichtet.

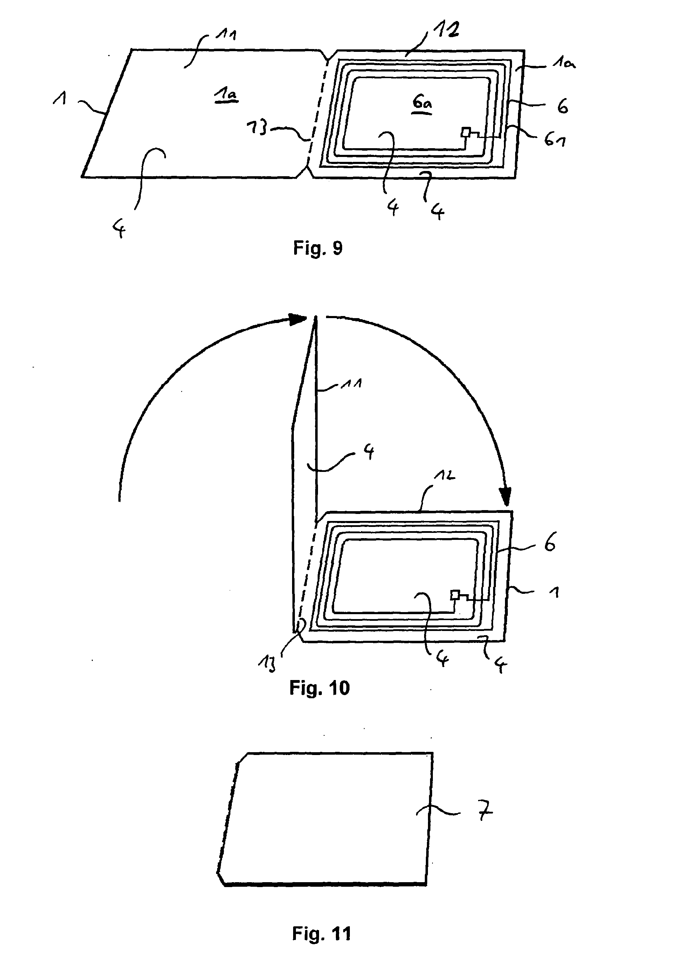

In **Fig. 2** ist eine Draufsicht auf einen Transponder 61 (RF-ID-Tag) gezeigt, der später zwischen den beiden Teilen 11 und 12 des Etiketts 1 als elektronisches Bauteil 6 eingeklebt werden soll, damit eine aktive, fernabfragbare und gegebenenfalls fernprogrammierbare Karte 7 (vgl. Fig. 11) entsteht.

Der Transponder 61 ist dabei auf einem flexiblen Bauelement-Träger 64 ausgebildet, der eine Antenne 63 und einen Chip 62 trägt, der durch die Antenne 63 mit Energie versorgt wird und über diese eine Sende- und Empfangsverbindung mit einer separaten Kommunikationseinrichtung herstellen kann. Der Transponder 61 ist im Beispiel auf Vorderseite 6a und Rückseite 6b mit einer Haftkleberschicht 4 versehen. Diese ist optional, da die dem Träger 64 zugewandten Flächen des Etiketts 1 a später den Transponder 61 umschließen.

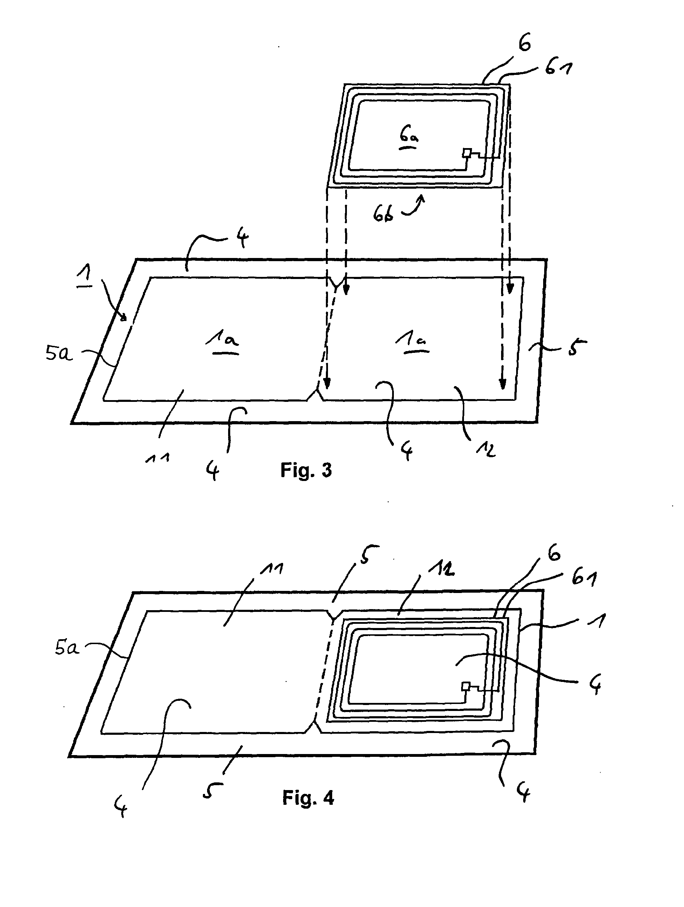

Damit der Transponder 61 schon auf dem Etikett 1 befindlich auf den Träger bzw. Substrat 2 aufgebracht werden kann, wird dieser bevorzugt, wie in **Fig. 3** dargestellt, auf eine dem Träger 2 zugewandte Fläche 1 a des Etiketts 1 aufgeklebt.

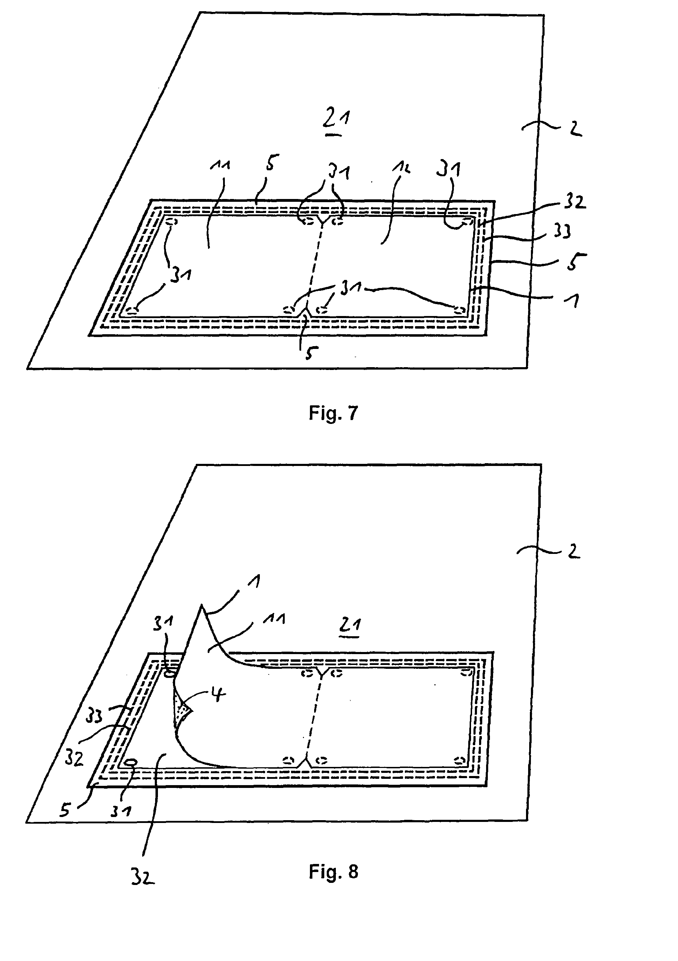

**Fig. 4** zeigt das Etikett 1 mit darauf befestigtem Transponder 61. Das so vorbereitete Etikett 1 wird dann später auf die auf dem Träger 2 ausgebildete Untergrundfläche 3 aufgesetzt, vgl. Fig. 7.

In den Fig. 5 bis 7 sind die einzelnen Herstellungsstadien eines erfindungsgemäßen Etiketts 1 mit Träger 2 dargestellt.

**Fig. 5** zeigt einen Papierbogen als Träger 2, auf dessen Oberseite 21 eine Haftvermittler-Beschichtung 33 aufgebracht worden ist. Diese Beschichtung 33 dient zur verbesserten Haftung einer danach gemäß **Fig. 6** aufgebrachten Silikonbeschichtung, die eine dehäsive Untergrundfläche 32 für das Etikett 1 bildet.

Die dehäsive Fläche 32 ist dabei geringfügig kleiner - wie im Beispiel - oder etwa deckungsgleich mit der Fläche der Haftvermittler-Beschichtung 33. Da die Untergrundfläche 32 aus einer Silikonbeschichtung besteht, hat sie dehäsive Eigenschaften für die auf dem Etikett 1 und dem Transponder 61 ausgebildete Haftkleberschicht 4. Als Kleber für die Haftkleberschicht 4 wird ein flächig aufgebrachter permanenter Haftkleber verwendet, insbesondere ein UV-vernetzender Acrylatkleber, ein Schmelzhaftkleber, oder ein Dispersions-Haftkleber. Dieser Kleber gewährleistet später eine sichere Haftung des Etiketts auf einem Untergrund, oder eine permanente Haftung zwischen den Teilen 11 und 12 des Etiketts 1 selber.

In der Untergrundfläche 32 sind entsprechend den Ecken der später darauf befestigten Teile 11 und 12 des Etiketts 1 Haftbereiche 31 ohne dehäsive Eigenschaft vorgesehen. Hierzu wird in diesen Bereichen keine Silikonbeschichtung 32 aufgebracht, wodurch dort der Kleber der Haftkleberschicht 4 haften kann. Hierdurch wird ein ungewolltes Ablösen des Etiketts 1 beim Durchlaufen des Trägers 2 mit dem Etikett 1 durch eine Druckmaschine verhindert.

**Fig. 7** zeigt das erfindungsgemäße Etikett 1, dass auf der Untergrundfläche 32 des Trägers 2 aufgeklebt ist. Gleichzeitig mit dem Etikett 1 ist der von der Materialdicke her gleich starke Rahmen 5 aufgebracht worden, dessen Haftkleberschicht die dehäsive Untergrundfläche 32 (Silikonbeschichtung) überragt und dadurch fest und sicher auf dem Träger 2 haftet. Dadurch wird die äußere Kante des Etiketts 1 sehr gut gegen ungewolltes Ablösen im Bedruckungsvorgang geschützt.

In **Fig. 8** ist zur weiteren Verdeutlichung eine gewollte Ablösung des Etiketts 1 vom Träger 2 dargestellt. Dabei wird die Stanzung 5a vom Benutzer aufgebrochen bzw. abgerissen.

**Fig. 9** zeigt bei einem vollständig abgelösten Etikett 1 eine Draufsicht auf die ehemals dem Träger 2 zugewandte Fläche 1 a des Etiketts 1 bzw. die ehemals dem Träger 2 zugewandte Fläche 6a des elektronischen Bauteils 6 (Transponder 61). Beide Flächen 1a und 6a sind mit der Haftkleberschicht 4 überzogen.

Damit eine erfindungsgemäße Karte 7 hergestellt wird, werden die beiden Teile 11 und eine des Etiketts 1 entlang ihrer gelenkigen Verbindung 13 aufeinander zu 11 und 12 des Etiketts 1 entlang ihrer gelenkigen Verbindung 13 aufeinander zu geknickt (siehe **Fig. 10**) und aufeinander gelegt, sodass sich die Haftkleberschichten 4 dauerhaft fest miteinander verbinden. So entsteht die in **Fig. 11** dargestellte Karte 7 mit darin eingeschlossenem elektronischem Bauteil. Dadurch sind in einfacher Weise zuverlässig herstellbare und beispielsweise als Brief zu versendenden Eintrittskarten, Fahrkarten, Erkennungskarten (IDs), Zugangs-Berechtigungs-Karten oder dgl. herstellbar. Für das Etikett 1 kann dabei auch wasserfestes Material verwendet werden.

Naturgemäß sind im Rahmen der Erfindung vielfache Abwandlungen und Modifikationen möglich. Z.B. können auf einem Trägerbogen 2 auch zwei oder mehr Eintrittskarten 1 angeordnet werden.

### Bezugszeichenliste

- 1: Etikett
- 1a: dem Träger zugewandte Fläche des Etiketts
- 11, 12: Teile des Etiketts
- 13: gelenkige Verbindung
- 2: Träger
- 21: Oberfläche des Trägers
- 31: Haftbereiche
- 32: Silikonbeschichtung
- 33: Haftvermittler-Beschichtung
- 4: Haftkleberschicht
- 5: Rahmen
- 5a: Abreißbare Stanzung
- 6: elektronisches Bauteil
- 6a: dem Träger 2 zugewandte Fläche des Bauteils, Vorderseite
- 6b: Rückseite
- 61: Transponder
- 62: Chip
- 63: Antenne
- 64: flexibler Bauelement-Träger
- 7: Karte

## Patentansprüche

1. Anordnung mit einem Substrat (2) und mindestens einem auf diesem angeordneten Selbstklebeetikett (1), welches einen ablösbaren nutzbaren Abschnitt (1a) und einen diesen nutzbaren Abschnitt umgebenden Rahmen (5) aufweist, wobei Rahmen (5) und nutzbarer Abschnitt (1a) mindestens bereichsweise trennbar miteinander verbunden und mit einem Haftkleber (4) versehen sind,
und das Substrat (2) an den Stellen (32), wo es den nutzbaren Abschnitt (1a) trägt, mindestens bereichsweise mit einer dehäsiven Beschichtung (32) versehen ist, um ein Ablösen des Haftklebers (4) des nutzbaren Abschnitts (1a) vom Substrat (2) zu ermöglichen.

2. Anordnung nach Anspruch 1, bei welcher der Rahmen (5) mittels seines Haftklebers (4) mindestens bereichsweise auf das Substrat (2) permanent aufgeklebt ist.

3. Anordnung nach Anspruch 1 oder 2, bei welcher die dehäsive Beschichtung (32) des Substrats (2) Lücken (31) aufweist, um dort eine bessere Verbindung des nutzbaren Abschnitts (1 a) mit dem Substrat (2) zu ermöglichen.

4. Anordnung nach einem der vorhergehenden Ansprüche, bei welcher sich die dehäsive Beschichtung (32) des Substrats (2) mindestens bereichsweise über den Umriss des nutzbaren Abschnitts (1 a) hinaus in einen Teilbereich des Rahmens (5) erstreckt.

5. Anordnung nach einem der vorhergehenden Ansprüche, bei welcher der nutzbare Abschnitt (1 a) im wesentlichen die Form von zwei Kartenteilen aufweist, die gelenkig (13) miteinander verbunden sind.

6. Anordnung nach Anspruch 5, bei welcher die beiden Kartenteile (1 a) durch Zusammenklappen (Fig. 10) an ihrer gelenkigen Verbindungsstelle (13) zu einer Kreditkarte, Eintrittskarte oder dergleichen (7) vereinigbar sind, wobei sie durch den Haftkleber (4) des Selbstklebeetiketts miteinander verbunden sind.

7. Anordnung nach einem der vorhergehenden Ansprüche, bei welcher an der mit einem Haftkleber (4) versehenen Seite des nutzbaren Abschnitts (1 a) eine Spule (63) für einen Transponder angeordnet ist.

8. Anordnung nach einem der vorhergehenden Ansprüche, bei welcher als Haftkleber für das Selbstklebeetikett (1) ein permanenter Haftkleber (4), insbesondere ein UV-vernetzender Acrylatkleber, vorgesehen ist.

9. Anordnung nach einem der vorhergehenden Ansprüche, bei welcher das Etikett (1) und das Substrat (2) zur Bedruckung in einem Drucker ausgebildet sind.

10. Anordnung nach einem der vorhergehenden Ansprüche, bei welcher das Substrat (2) im Bereich der vom Rahmen (5) abgedeckten Fläche mindestens eine Haftfläche (31) aufweist, welche weniger dehäsiv oder ohne dehäsive Eigenschaften ausgebildet ist.

11. Anordnung nach einem der vorhergehenden Ansprüche, bei welcher die Materialdicke des Rahmens (5) im wesentlichen der Materialdicke des Etiketts (1) entspricht.

12. Anordnung nach Anspruch 10 oder 11, bei welcher der Rahmen (5) an seiner dem Substrat (2) zugewandten Seite mit einer auf dem Substrat (2) permanent haftenden Haftkleberschicht (4) versehen ist.

13. Anordnung nach einem der Ansprüche 10 bis 12, bei welcher der Rahmen (5) und das Etikett (1) wenigstens bereichsweise durch eine Stanzung (5a) trennbar miteinander verbunden.

14. Anordnung nach einem der Ansprüche 9 bis 13, bei welcher das Substrat (2) ein Papierblatt oder einen Bogen aus einem ähnlichen bedruckbaren Material aufweist.

15. Anordnung nach einem der vorhergehenden, bei welcher unter der dehäsiven Beschichtung (32) des Substrats (2) eine Haftvermittler-Beschichtung (33) vorgesehen ist.

16. Anordnung nach Anspruch 15, bei welcher die Haftvermittler-Beschichtung als Primerschicht (33) ausgebildet ist.

17. Anordnung nach einem der vorhergehende Ansprüche, bei welcher an der dem Substrat (2) zugewandten Seite (1a) des Etiketts (1) ein flach ausgebildetes, berührungslos auslesbares elektronisches Bauteil (6), insbesondere ein Transponder (61) oder ein RF-ID-Tag, angeordnet ist.

18. Anordnung nach Anspruch 17, bei welcher das elektronische Bauteil (6) an seiner der dehäsiv ausgebildeten Fläche (3) des Substrats (2) zugewandten Seite (6a) mit einer Haftkleberschicht (4) versehen ist.

19. Anordnung nach einem der vorhergehenden Ansprüche, bei welcher der Haftkleber als im wesentlichen flächig aufgebrachter permanenter Haftkleber (4) ausgebildet ist.

20. Anordnung nach Anspruch 19, bei welcher der permanente Haftkleber (4) als UV-vernetzbarer Acrylatkleber ausgebildet ist.

21. Anordnung nach Anspruch 19, bei welcher der permanente Haftkleber (4) als Schmelzhaftkleber ausgebildet ist.

22. Anordnung nach Anspruch 19, bei welcher der permanente Haftkleber (4) als Dispersions-Haftkleber ausgebildet ist.

23. Anordnung nach einem der vorhergehenden Ansprüche, bei welcher auf einem Substrat (2) mindestens zwei bedruckbare Etiketten (1) angeordnet sind.

24. Verwendung eines Etiketts (1) nach einem der vorhergehenden Ansprüche zur Herstellung einer Karte (7), insbesondere einer bedruckten Karte, bei welcher Flächen von zwei Teilen des Etiketts (1) indirekt oder direkt miteinander verklebt sind.
